# EUROPÄISCHE PATENTSCHRIFT

(11) **EP 3 716 821 B1**
(45) Veröffentlichungstag und Bekanntmachung des Hinweises auf die Patenterteilung: **27.04.2022**
(21) Anmeldenummer: 17817687.1
(22) Anmeldetag: 30.11.2017
(51) Int. Cl.: A47J 27/04, A47J 27/16, A47J 37/04

(54) **VORRICHTUNG MIT LINEARANTRIEB ZUM AUFBEREITEN VON LEBENSMITTELN**
APPARATUS WITH LINEAR DRIVE FOR PREPARING FOODSTUFFS
DISPOSITIF COMPRENANT UN ENTRAÎNEMENT LINÉAIRE SERVANT À PRÉPARER DES DENRÉES ALIMENTAIRES

(43) Veröffentlichungstag der Anmeldung: 07.10.2020
(73) Patentinhaber: Carogusto AG, 8580 Amriswil (CH)
(72) Erfinder: GRENDELMEIER, Thomas, 8634 Hombrechtikon (CH); SCHENK, Philipp, 9215 Schönenberg an der Thur (CH); SCHRANZ,Samuel, 3252 Worben (CH)
(74) Vertreter: Patent- und Rechtsanwälte Behrmann Wagner PartG mbB
(86) Internationale Anmeldenummer: PCT/EP2017/080984
(87) Internationale Veröffentlichungsnummer: WO 2019/105555

(56) Entgegenhaltungen:
- WO-A1-2016/200156
- WO-A1-2017/072180

## Beschreibung

Die Erfindung betrifft eine Vorrichtung gemäß dem Oberbegriff des Anspruchs 1 zum Aufbereiten von in einem Gefäß aufgenommenen Lebensmitteln, insbesondere von Fertiggerichten, umfassend eine in einem Gehäuse angeordnete Dampferzeugungseinheit zum Erzeugen von Dampf, eine mit der Dampferzeugungseinheit dampfleitend über eine Dampfversorgungsleitung verbundene Dampfzuführeinheit mit einer mindestens eine Dampfabgabeöffnung aufweisenden Dampfsonde sowie einen Antriebsstrang mit Elektromotor aufweisende Linearantriebsmittel zum translatorischen Verstellen eines, insbesondere die Dampfzuführeinheit oder eine Gefäß-Halterung tragenden, Schlittens relativ zu dem Gehäuse.

Die WO 2017/072180 A1 beschreibt eine Vorrichtung zum Aufbereiten von in einem Gefäß aufgenommenen Lebensmitteln, wobei eine Dampfzuführeinheit mittels eines Hubantriebs entlang einer vertikalen Führungsschiene relativ zu einem Gefäß verstellbar ist, welches an einer Gefäß-Halterung gehalten ist. Die Gefäß-Halterung ist mittels eines horizontalen Verstellantriebs von einer Aufgabeposition, in der die Gefäß-Halterung mit dem Gefäß beladbar ist und einer Funktionsposition (Bedampfungsposition) unterhalb der Dampfzuführeinheit verstellbar. Die bekannte Vorrichtung hat sich bewährt. Es bestehen jedoch Bestrebungen, die Antriebsmittel konstruktionseinfacher und sicherer zu gestalten.

Diese Aufgabe wird mit einer Vorrichtung mit den Merkmalen des Anspruchs 1 gelöst.

Vorteilhafte Weiterbildungen der Erfindung sind in den Unteransprüchen angegeben. In den Rahmen der Erfindung fallen sämtliche Kombinationen aus zumindest zwei von der in der Beschreibung, den Ansprüchen und/oder den Figuren offenbarten Merkmalen.

Der Erfindung liegt der Gedanke zugrunde, den eine Funktionseinheit der Vorrichtung tragenden Schlitten relativ zu dem Gehäuse translatorisch über einen, bevorzugt als Zahnriementrieb ausgebildeten Riementrieb zu verstellen, welcher zwischen seinen Stellpositionen wiederum mittels eines Elektromotors angetrieben ist. Verglichen mit einem Spindelantrieb ist ein erfindungsgemäß vorgesehener Riemenantrieb einfach aufgebaut und ermöglicht vor allem schnelle Hin- und Herbewegungen des Schlittens entlang einer, insbesondere horizontalen oder vertikalen Verstellachse. Darüber hinaus ermöglicht das Vorsehen eines Riementriebs in dem Antriebsstrang für den Schlitten eine einfache Integration einer Überlastkupplung (Sicherheitskupplung) zur Reduzierung der Verletzungsgefahr. Dabei ist die Überlastkupplung, wie später noch erläutert werden wird, bevorzugt als Durchrastkupplung ausgebildet. Die Überlastkupplung trägt dafür Sorge, dass bei Blockierung des Verfahrwegs des Schlittens, beispielsweise unmittelbar durch den Benutzer das im Antriebsstrang maximal übertragbare Drehmoment begrenzt und somit die Verletzungsgefahr für den Benutzer minimiert ist. Im Hinblick auf die konkrete Funktionalität bzw. Anordnung des erfindungsgemäßen Antriebsstrangs in der Vorrichtung gibt es unterschiedliche Möglichkeiten. So kann der Antriebsstrang gemäß einer ersten, bevorzugten Ausführungsform derart angeordnet sein, dass mit diesem eine Dampfzuführeinheit relativ zu einem Gefäß und/oder realtiv zu einer Gefäß-Halterung, insbesondere in vertikaler Richtung verstellbar ist. Zu diesem Zweck trägt der Schlitten bevorzugt die Dampfzuführeinheit. Gemäß einer weiteren möglichen Ausführungsform, die alternativ oder zusätzlich zu der zuvor beschriebenen Ausführungsform in einer gemeinsamen Vorrichtung realisierbar ist, trägt der Schlitten eine Gefäß-Halterung, die mittels des den Riementrieb und die Überlastkupplung umfassenden Antriebsstrangs, insbesondere in horizontaler Richtung, translatorisch zwischen einer Aufgabeposition und einer Funktionsposition unterhalb der Dampfzuführeinheit verstellbar ist. Ebenso ist es möglich, mittels des erfindungsgemäßen Antriebsstrangs die Gefäß-Halterung in vertikaler Richtung relativ zu der dann bevorzugt ortsfesten Dampfzuführeinheit zu verstellen. Ganz besonders bevorzugt ist eine Ausführungsform der Vorrichtung zum Aufbereiten von in einem Gefäß aufgenommenen Lebensmitteln, bei der diese zwei nach dem Konzept der Erfindung ausgebildete, jeweils einen Riementrieb, insbesondere einen Zahnriementrieb und eine Überlastkupplung umfassende Antriebsstränge aufweist, insbesondere zum, bevorzugt vertikalen, translatorischen Verstellen der Dampfzuführeinheit und zum, insbesondere horizontalen, translatorischen Verstellen einer Gefäß-Halterung zwischen einer Be- und Entladeposition sowie einer Bedampfungsposition unterhalb der Dampfzuführeinrichtung. Bevorzug befindet sich der mindestens eine Antriebsstrang samt Elektromotor, Durchrastkupplung und Riementrieb innerhalb des Gehäuses, wobei eine zugeordnete, langgestreckte Gehäuseöffnung entweder von dem Schlitten selbst oder der auf dem Schlitten angeordneten Funktionseinheit, insbesondere Dampfzuführeinheit oder der Gefäß-Halterung bis auf die Außenseite der Vorrichtung durchsetzt ist.

In Weiterbildung der Erfindung umfasst die Überlastkupplung zur Drehmomentübertragung zwischen einer Antriebs- und einer Abtriebsseite der Überlastkupplung mindestens ein bei Überlast einfederndes, rotierbar angeordnetes, bevorzugt monolithisches, Kunststofffederelement, ganz besonders bevorzugt in Form eines Kunststoffspritzgussteils. Das Kunststofffederelement ist dabei derart ausgebildet und angeordnet, dass dieses bei Überschreiten eines vorgegebenen maximalen Drehmomentes einfedert und damit die Drehmomentübertragung von der Antriebsseite auf die Abtriebsseite unterbrochen oder begrenzt wird, in dem sich im eingefederten Zustand Antriebs- und Abtriebsseite der Kupplung relativ zueinander verdrehen.

Das Vorsehen eines Kunststofffederelementes ermöglicht den bevorzugten Verzicht auf Metallfederelemente, wodurch eine besonders kostengünstige und nicht korrosionsanfällige Überlastkupplung realisierbar ist. Durch das Vorsehen eines Kunststofffederelementes ist das Federelement zudem im Hinblick auf ein maximal zu übertragendes Drehmoment besonders einfach skalierbar. Hierzu muss lediglich die Materialstärke des Kunststofffederelementes in axialer Richtung bezogen auf eine Rotationsachse des Kunststofffederelementes angepasst und/oder die Anzahl von axial benachbarten Kunststofffederelementen angepasst werden.

Besonders zweckmäßig ist es, wenn das Kunststofffederelement (abtriebsseitig) eine zentrische Mehrkantabtriebsöffnung zum Übertragen eines Drehmomentes auf eine Abtriebswelle aufweist, auf welcher bevorzugt ein Riemenantriebsrad, insbesondere ein Zahnrad, zum Antreiben des Riementriebs sitzt. Das Riemenantriebsrad ist bevorzugt drehfest auf der Abtriebswelle angeordnet ist.

Im Hinblick auf die konkrete Ausgestaltung des Kunststofffederelementes hat es sich als besonders vorteilhaft herausgestellt, wenn dieses zwei diametral gegenüberliegende, bevorzugt bogenförmige, ganz besonders bevorzugt jeweils eine D-Form aufweisende Federabschnitte aus Kunststoff aufweist. Gemäß einer ersten Ausführungsvariante können diese spiegelsymmetrisch zu einer die Drehachse (Rotationsachse) des Kunststofffederelementes aufnehmenden (Spiegel-)Ebene ausgebildet sein, sodass bei Wechselwirkung mit einer richtungsunabhängigen Rastverzahnung in beide Verstellrichtungen des Riementriebs die gleichen maximalen Drehmomente übertragbar sind. Bei einer alternativen Ausführungsform sind die beiden diametral einander gegenüberliegenden Federabschnitte asymmetrisch zu der vorerwähnten Ebene ausgebildet und unterstützen somit die Realisierung zweier unterschiedlicher, richtungsabhängiger maximal übertragbarer Drehmomente.

Grundsätzlich ist es möglich, dass das Kunststofffederelement unmittelbar selbst mit einer Rastverzahnung, insbesondere einer Kupplungsscheibe oder -hülse zur Drehmomentübertragung und zum Überrasten bei Überlast zusammenwirkt. Bevorzugt ist jedoch eine Ausführungsform, bei der das mindestens eine Kunststofffederelement mindestens einen Wälzkörper, insbesondere eine Rolle, aus einem zu dem Kunststoff des Kunststofffederelementes unterschiedlichen, bevorzugt eine höhere Festigkeit aufweisenden, ganz besonders bevorzugt metallischen Material zur Drehmomentübertragung auf eine Rastverzahnung trägt, und dass der mindestens eine Wälzkörper bei Überlast durch Einfedern des mindestens einen Kunststofffederelementes auf der Rastverzahnung abrollt bzw. akustisch durch ein ratterndes Geräusch hörbar durchrastet. Bevorzugt wird der Wälzkörper mittels des Kunststofffederelementes radial bevorzugt gegen die Rastverzahnung federkraftbeaufschlagt. Für den bevorzugten Fall der Realisierung des Wälzkörpers als Rolle ist diese bevorzugt rotierbar angeordnet auf einer Achse, die parallel verläuft zu einer, insbesondere zentrischen Dreh- bzw. Rotationsachse, um die das Kunststofffederelement zur Drehmomentübertragung von der Antriebsseite auf eine Abtriebsseite der Kupplung rotierbar ist.

Bevorzugt sind mehrere Wälzkörper über den Umfang verteilt angeordnet. Ganz besonders bevorzugt umfasst die Kupplung, insbesondere ausschließlich zwei, diametral gegenüberliegende, noch weiter bevorzugt jeweils als rotierbare Rolle ausgebildete Wälzkörper.

Im Hinblick auf die Ausgestaltung der Rastverzahnung gibt es wiederum zwei unterschiedliche Möglichkeiten. So kann diese richtungsunabhängig ausgestaltet sein, also derart, dass die Verzahnung in beide Umfangs- bzw. Umdrehungsrichtungen symmetrische Zahnformen aufweist und zum Überrasten in beide Umdrehungsrichtungen das gleiche Drehmoment notwendig ist. Eine solche Ausführungsform ist insbesondere dann von Vorteil, wenn der Antriebsstrang zum horizontalen Verstellen einer Gefäß-Anordnung eingesetzt ist. Gemäß einer alternativen Ausführungsform wird eine richtungsabhängige Rastverzahnung, also eine Rastverzahnung mit asymmetrischer Zahnform eingesetzt, die in die unterschiedlichen Umdrehungsrichtungen zum Überrasten ein unterschiedliches Drehmoment benötigt, bevorzugt in Kombination mit asymmetrischen Federabschnitten des Kunststofffederelementes. Eine solche Ausführungsform ist insbesondere von Vorteil beim Einsatz des Antriebsstrangs zum vertikalen Verstellen der Dampfzuführeinheit, wobei die Rastverzahnung dann bevorzugt derart ausgebildet ist, dass zum Überrasten, d.h. Auslösen der Sicherheitskupplung ein geringeres Drehmoment notwendig ist, wenn die Dampfzuführeinheit vertikal nach unten in Richtung Gefäß verstellt wird und ein höheres Auslösedrehmoment bei einer Verstellung in die entgegengesetzte Richtung benötigt wird.

Unabhängig von der konkreten Ausgestaltung der Rastverzahnung kann diese alternativ auf der Antriebsseite oder der Abtriebsseite der Kupplung angeordnet sein. Bevorzugt ist eine antriebsseitige Anordnung der Rastverzahnung, wobei diese beispielsweise monolithisch ausgebildet sein kann mit einem insbesondere als Schneckenrad ausgebildeten Antriebsrad, insbesondere aus Kunststoff, welches, bevorzugt über eine Antriebsschnecke mittels des Elektromotors antreibbar ist. Bei einer alternativen Ausführungsform kann die Rastverzahnung, insbesondere als Innenverzahnung an einer Kupplungsscheibe, beispielsweise aus Metall ausgebildet sein, die bevorzugt drehfest mit einem Antriebsrad, insbesondere einem Schneckenrad verbunden ist.

Grundsätzlich ist es möglich, dass der mindestens eine Wälzkörper, insbesondere die mindestens eine Rolle von einem einzigen Kunststofffederelement gehalten ist. Bevorzugt ist jedoch eine Ausführungsform, bei der der Wälzkörper von zwei axial benachbarten, insbesondere beabstandeten Kunststoffelementen gehalten ist bzw. getragen wird, wobei der Wälzkörper, insbesondere die Rolle bevorzugt auf einer Achse aufsitzt, die sich zwischen den axial gegenüberliegenden Kunststofffederelementen erstreckt.

Dabei ist es denkbar, dass der Wälzkörper drehfest auf der Achse sitzt und die Achse als Welle ausgebildet ist und relativ zu den Kunststoffelementen verdrehbar angeordnet ist. Bevorzugt ist jedoch eine Ausführungsform, bei der Wälzkörper auf der Achse abrollen kann, die bevorzugt in zwei Einstecköffnungen axial benachbarter Kunststofffederelemente gehalten ist. Bevorzugt umfasst die Vorrichtung eine Riemenspanneinrichtung zum Spannen des Riemens, insbesondere des Zahnriemens. Dabei ist es grundsätzlich denkbar, entweder eine Riemenantriebsrolle oder eine gegenüberliegende Umlenkrolle verstellbar anzuordnen. Bevorzugt ist jedoch eine Ausführungsform, bei der die Riemenspanneinheit am Schlitten angeordnet ist, derart, dass mit dieser zwei Riemenabschnitte zum Spannen des Riemens über einen Verstellmechanismus aufeinander zu verstellbar sind. Grundsätzlich ist es denkbar, den Riemen als Endlosriemen auszugestalten, was jedoch bei der vorliegenden Anwendung nicht notwendig ist, da der Schlitten nicht umlaufend, sondern lediglich hin und her antreibbar ist. Somit ist auch eine Ausführungsform realisierbar und bevorzugt, bei der der Riemen zwei freie Enden aufweist, die in Richtung aufeinander zu mittel der Riemenspanneinrichtung verstellbar sind.

Besonders zweckmäßig ist es, wenn dem Schlitten eine translatorische Schlittenführung, insbesondere umfassend zwei parallele Gleitstangen zugeordnet sind. Diese Schlittenführung kann in Weiterbildung der Erfindung gleichzeitig zum Tragen der Komponenten des Antriebsstrangs dienen, um somit ein Antriebsstrangmodul zu schaffen, welches bei der Montage besonders einfach in das Vorrichtungsgehäuse integrierbar ist. Bevorzugt umfasst dieses Antriebsstrangmodul die Führungsstangen, die einends das Riemenantriebsrad zusammen mit dem Elektromotor und der Überlastkupplung trägt und anderenends eine Riemenumlenkrolle. Riemenumlenkrolle und Riemenantrieb sind dabei bevorzugt dauerhaft ortsfest zueinander angeordnet und die Riemenerspannung erfolgt bevorzugt über eine schlittenseitige Riemenspanneinrichtung.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine stark schematisierte Frontansicht einer nach dem Konzept der Erfindung ausgebildeten Vorrichtung zum Aufbereiten von in einem Gefäß aufgenommenen Lebensmitteln, wobei eine Dampfzuführeinheit in vertikaler Richtung mittels nach dem Konzept der Erfindung ausgebildeten Antriebsmitteln und eine Gefäß-Halterung in horizontaler Richtung hin und her mit nach dem Konzept der Erfindung ausgebildeten Antriebsmitteln verstellbar ist,
- Fig. 2: eine perspektivische Ansicht von als Modul ausgebildeten, nach dem Konzept der Erfindung realisierten Antriebsmitteln, umfassend einen als Zahnriementrieb ausgebildeten Riementrieb,
- Fig. 3: eine rückwärtige Ansicht eines Schlittens der Vorrichtung, welcher je nach Ausgestaltung eine Dampfzuführeinheit oder eine Gefäßhalterung trägt,
- Fig. 4: eine Explosionsdarstellung eines ersten Ausführungsbeispiels eines Antriebsstrangs umfassend eine als Durchrastkupplung ausgebildete Überrastkupplung mit einer an einem als Schneckenrad ausgebildeten Antriebsrad festgelegten Kupplungsscheibe, und
- Fig. 5: eine alternative Ausführungsform des Antriebsstrangs, bei welcher eine Rastverzahnung der als Durchrastkupplung ausgebildeten Überlastkupplung monolithisch mit dem als Schneckenrad ausgebildeten Antriebsrad ausgebildet ist.

In den Figuren sind gleiche Elemente mit der gleichen Funktion mit den gleichen Bezugszeichen gekennzeichnet.

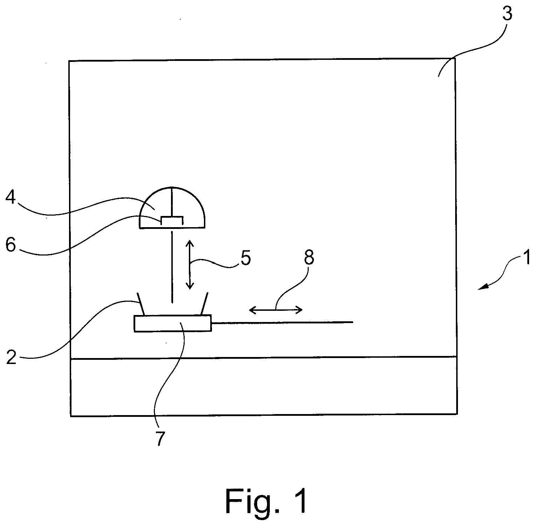

In Fig. 1 ist schematisch eine Vorrichtung 1 zum Aufbereiten, insbesondere Erwärmen von in einem Gefäß 2 aufgenommenen Lebensmitteln, insbesondere von Fertiggerichten mit Dampf gezeigt. Die Vorrichtung 1 umfasst ein Gehäuse 3, in welchem eine Dampferzeugungseinheit, ggf. mit nachgeschalteter Dampfüberhitzungseinheit angeordnet ist, um, insbesondere überhitzten Dampf zu erzeugen und über eine gehäuseinterne Dampfversorgungsleitung einer Dampfzuführeinheit 4 zuzuführen. Die Dampfzuführeinheit 4 ist in den Pfeilrichtungen 5 translatorisch entlang der Vertikalen verstellbar und zwar aus der gezeigten oberen Position in eine untere Position, in der die Dampfzuführeinheit 4 auf dem Gefäß 2 aufsitzt und einen Garraum bildet. Die Dampfzuführeinheit 4 umfasst Dampfsonden 6 mit Dampfauslassöffnungen zum Erwärmen des Lebensmittels. Bevorzugt sind die Dampfsonden 6, insbesondere um eine Vertikalachse, rotierbar, um für eine bessere Dampfverteilung Sorge zu tragen.

In dem gezeigten Ausführungsbeispiel sitzt das nicht zur Vorrichtung 1 gehörende Gefäß 2 auf einer Gefäßhalterung 7 auf, die translatorisch in der Vertikalen entlang den Pfeilrichtungen 8 hin und her verstellbar ist, und zwar zwischen der gezeigten Funktionsposition unterhalb der Dampfzuführeinheit 6 und einer in der Zeichnungsebene rechts versetzten Beladeposition, in der auf die Gefäß-Halterung 7 ein Gefäß aufsetzbar und nach erfolgter Erwärmung wieder entnehmbar ist.

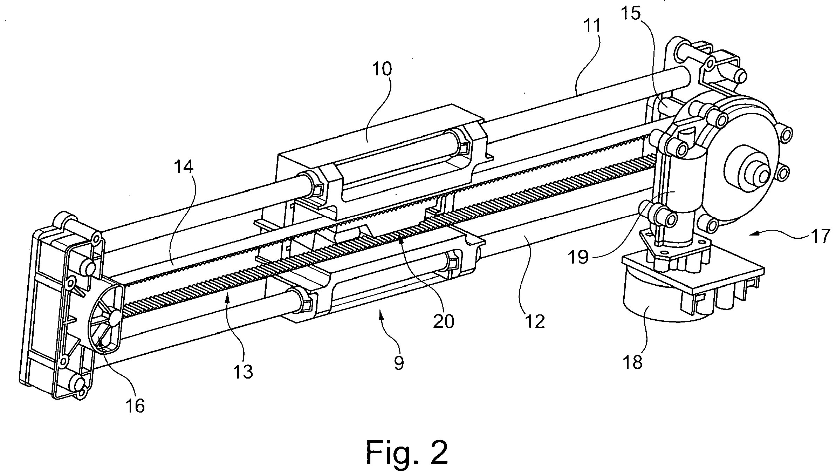

Fig. 2 zeigt nun eine bevorzugte Ausführungsform von Antriebsmitteln 9 zum translatorischen Verstellen der Dampfzuführeinheit 4 und/oder der Gefäß-Halterung 7 gemäß Fig. 1. Die Antriebsmittel 9 sind dabei derart ausgebildet, dass sie einen Schlitten 10 translatorisch hin und her verstellen, wobei der Schlitten die eigentliche Funktionseinheit, d.h. vorliegend die Dampfzuführeinheit 4 oder alternativ die Gefäß-Halterung 7 trägt. Die Antriebsmittel 9 befinden sich dabei zusammen mit dem Schlitten innerhalb des Gehäuses 3 gemäß Fig. 1, wobei längliche bzw. schlitzartige Gehäuseöffnungen von der jeweiligen Funktionseinheit durchsetzt sind.

Die Antriebsmittel 9 sind in dem gezeigten Ausführungsbeispiel als Antriebsmodul ausgebildet und umfassen den Schlitten 10 tragende, parallele Führungsstangen 11, 12, entlang derer der Schlitten 10 bei seiner translatorischen Verstellbewegung gleiten kann. Ferner umfassen die Antriebsmittel 9 einen als Zahnriementrieb ausgebildeten Riementrieb 13 mit einem als Zahnriemen ausgebildeten Riemen 14, der von einem Riemenantriebsrad 15 antreibbar ist und der gegenüberliegend um eine Riemenumlenkrolle 16 umgelenkt ist.

Die Antriebsmittel 9 bzw. deren Antriebsstrang 17 umfassen einen Elektromotor 18, der über eine in einem Getriebegehäuse 19 angeordnete Antriebsschnecke ein in dem Getriebegehäuse 19 angeordnetes, als Schneckenrad ausgebildetes Antriebsrad 29 antreibt. Zwischen Antriebsrad 29 und Riemenantriebsrad 15 befindet sich eine später noch zu erläuternde, als Durchrastkupplung ausgebildete Überlastkupplung (Sicherheitskupplung bzw. Rutschkupplung), um ein maximal auf den Schlitten 10 und damit die daran gehaltene Funktionseinheit übertragbares Drehmoment zu begrenzen.

Aus Fig. 2 ist zu entnehmen, dass die Riemenumlenkrolle 16 sowie das Riemenantriebsrad 15 mit der damit verbundenen Überlastkupplung und dem Elektromotor 18 fest relativ zueinander positioniert sind. Zum Spannen des Riemens 14 ist am Schlitten 10 eine Riemenspanneinrichtung 20 vorgesehen.

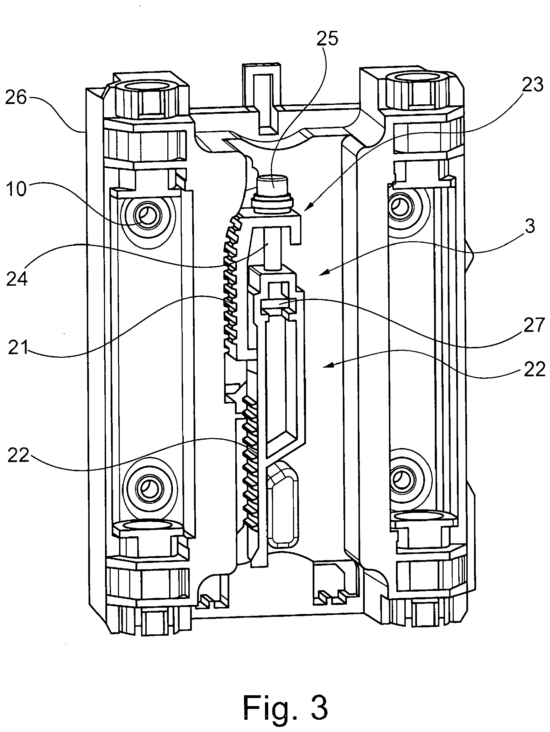

Die Riemenspanneinrichtung 20 ist in Fig. 3 näher dargestellt. Diese umfasst zwei entlang der Riemenlängserstreckung benachbarte Riemenfixiereinheiten 21, 22, die mittels eines Spannmechanismus 23 relativ zueinander, insbesondere aufeinander zu verstellbar sind, um den Riemen zu spannen. Bevorzugt ist in jeder Fixiereinheit 21, 22 ein freies Riemenende gehalten. Die Spanneinrichtung umfasst eine Spannschraube 24 mit endseitigem Antrieb 25, wobei die Spannschraube 24 entgegen der Federkraft einer Spannfeder 26 verstellbar ist und dabei in einer vorliegend als Vierkantmutter ausgebildeten Mehrkantmutter 27 verdreht wird, die drehfest gehalten ist in der Riemenfixiereinheit 22.

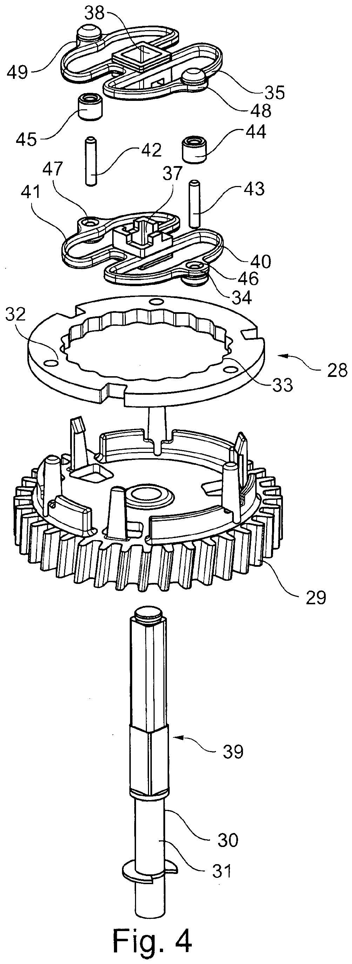

Fig. 4 zeigt eine Explosionsdarstellung eines ersten, bevorzugten Ausführungsbeispiels der erwähnten, als Durchrastkupplung ausgebildeten Überlastkupplung 28 als Teil des Antriebsstrangs der Antriebsmittel 9. Im Antriebsstrang befindet sich das bereits erwähnte, als Schneckenrad ausgebildete Antriebsrad 29, welches vorliegend als Kunststoffspritzgussteil ausgebildet ist und mit einer nicht gezeigten Antriebsschnecke kämmt, die wiederum mittels des Elektromotors antreibbar ist. Im montiertem Zustand sitzt das Antriebsrad 29 auf einem Zylinderabschnitt 30 einer Abtriebswelle 31, auf der wiederum drehfest das bereits im Zusammenhang mit Fig. 2 erwähnte Riemenantriebsrad 15 sitzt. Die Abtriebswelle 31 ist (bei durchrutschender Überlastkupplung) frei relativ zu dem Antriebsrad 29 verdrehbar.

Die Überlastkupplung 28 umfasst ein in dem gezeigten Ausführungsbeispiel drehfest mit dem aus Kunststoff ausgebildeten Antriebsrad 29 fixierte Kupplungsscheibe 32, hier beispielhaft aus Metall, die am Innenumfang eine Rastverzahnung 33 trägt, die je nach Anwendungsfall (vgl. allgemeiner Beschreibungsteil) Zähne mit einer asymmetrischen oder symmetrischen Zahnform aufweisen kann.

Der Rastverzahnung 33 sind in dem gezeigten Ausführungsbeispiel zwei jeweils monolithische, als Kunststoffspritzgussteile ausgebildete Kunststofffederelemente 34, 35 zugeordnet, die jeweils eine zentrischen Mehrkantöffnung 37, 38 aufweisen, die mit einem korrespondierenden Mehrkantabschnitt 39 der Abtriebswelle 31 zusammenwirkt, um auf diese ein Drehmoment zum Antreiben des Riementriebs und damit des Schlittens zu übertragen.

Die, axial benachbarten, jeweils einteiligen (monolithischen) Kunststofffederelemente 34, 35 sind in dem gezeigten Ausführungsbeispiel identisch ausgebildet, was bevorzugt ist - alternative bzw. unterschiedliche Geometrien sind realisierbar. Die Kunststofffederelemente 34, 35 umfassen jeweils zwei diametral gegenüberliegende, bogenförmige bzw. D-förmige Federabschnitte 40, 41, die bei Überlast nach radial innen bezogen auf eine Dreh- bzw. Rotationsachse der Kunststofffederelemente 34, 35 nach radial innen einfedern können.

Von den beiden Kunststofffederelementen 34, 35 werden im montierten Zustand zwei den Axialabstand zwischen den Kunststofffederelementen 34, 35 überbrückende Achsen 42, 43 gehalten, auf denen jeweils rotierbar ein als Rolle ausgebildeter Wälzkörper 44, 45 sitzt, der mittels des Kunststofffederelementes 34, 35 bzw. den Federabschnitten 40, 41 in radialer Richtung nach außen in die Rastverzahnung 33 federkraftbeaufschlagt ist. Wie sich aus Fig. 4 ergibt, sind die Achsen 42, 43 in korrespondierenden Einstecköffnungen 46, 47, 48, 49 der Kunststofffederelemente 34, 35 gehalten, wobei die Einstecköffnungen 46 bis 49 in jeweils einer Verdickung in einem radial äußersten Bereich der Federabschnitte 40, 41 angeordnet sind. Solange ein maximales Drehmoment nicht überschritten wird, greifen die Wälzkörper 44, 45 in die Rastverzahnung 33 ein, sodass ein Drehmoment von der Antriebsseite, d.h. vorliegend der Rastverzahnung 33 auf die Abtriebsseite, vorliegend die Mehrkantöffnungen 37, 38 bzw. die drehfest damit verbundene Abtriebswelle 31 übertragen wird. Wird ein zulässiges, vorgegebenes Drehmoment überschritten, rollen die Wälzkörper 44, 45 auf der Rastverzahnung 33 in Umfangsrichtung ab, d.h. rasten bevorzugt hörbar durch, sodass sich Antriebsseite und Abtriebsseite der Kupplung relativ zueinander verdrehen.

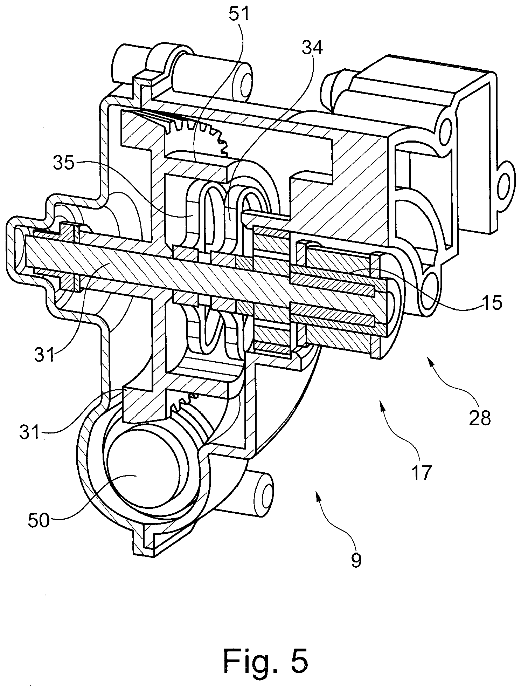

In Fig. 5 ist eine alternative Ausführungsform des Antriebsstrangs 17 der Antriebsmittel 9 gezeigt. Zu erkennen ist dort die Antriebsschnecke 50, die mittels des nicht gezeigten Elektromotors rotierbar ist, um das Antriebsrad 29 zu rotieren. Im Gegensatz zu dem zuvor erläuterten Ausführungsbeispiel ist die Kupplungsscheibe in dem gezeigten Ausführungsbeispiel als Rastverzahnungsabschnitt 51 des Antriebsrades 29 der Überlastkupplung 28 ausgebildet - mit anderen Worten ist die Rastverzahnung monolithisch mit dem Antriebsrad 29 ausgebildet. Zu erkennen ist auch die Abtriebswelle 31 mit dem endseitig drehfest aufsitzenden Riemenantriebsrad 15. Im Hinblick auf die weitere bzw. sonstige Ausgestaltung wird auf Fig. 4 mit zugehöriger Figurenbeschreibung verwiesen, insbesondere im Hinblick auf die Funktionsweise und Anordnung der Kunststofffederelemente 34, 35 und den von diesen gehaltenen Wälzkörpern.

### Bezugszeichenliste

- 1: Vorrichtung
- 2: Gefäß
- 3: Gehäuse
- 4: Dampfzuführeinheit
- 5: Pfeilrichtungen
- 6: Dampfsonden
- 7: Gefäß-Halterung
- 8: Pfeilrichtungen
- 9: Antriebsmittel
- 10: Schlitten
- 11: Führungsstange
- 12: Führungsstange
- 13: Riementrieb
- 14: Riemen
- 15: Riemenantriebsrad
- 16: Riemenumlenkrolle
- 17: Antriebsstrang
- 18: Elektromotor
- 19: Getriebegehäuse
- 20: Riemenspanneinrichtung
- 21: Riemenfixiereinheit
- 22: Riemenfixiereinheit
- 23: Spannmechanismus
- 24: Spannschraube
- 25: Antrieb der Spannschraube
- 26: Spannfeder
- 27: Mehrkantmutter
- 28: Überlastkupplung
- 29: Antriebsrad
- 30: Zylinderabschnitt der Abtriebswelle
- 31: Abtriebswelle
- 32: Kupplungsscheibe
- 33: Rastverzahnung
- 34: Kunststofffederelement
- 35: Kunststofffederelement
- 37: Mehrkantöffnung des Kunststofffederelementes
- 38: Mehrkantöffnung des Kunststofffederelementes
- 39: Mehrkantabschnitt
- 40: Federabschnitt
- 41: Federabschnitt
- 42: Achse
- 43: Achse
- 44: Wälzkörper
- 45: Wälzkörper
- 46: Einstecköffnungen
- 47: Einstecköffnungen
- 48: Einstecköffnungen
- 49: Einstecköffnungen
- 50: Antriebsschnecke
- 51: Rastverzahnungsabschnitt

## Patentansprüche

1. Vorrichtung zum Aufbereiten von in einem Gefäß (2) aufgenommenen Lebensmitteln, insbesondere von Fertiggerichten, umfassend eine in einem Gehäuse (3) angeordnete Dampferzeugungseinheit zum Erzeugen von Dampf, eine mit der Dampferzeugungseinheit dampfleitend über eine Dampfversorgungsleitung verbundene Dampfzuführeinheit (4) mit einer mindestens eine Dampfabgabeöffnung aufweisenden Dampfsonde (6) sowie einen Antriebstrang (17) mit Elektromotor (18) aufweisende Linearantriebsmittel zum translatorischen Verstellen eines die Dampfzuführeinheit (4) oder eine Gefäß-Halterung (7) tragenden Schlittens (10) relativ zu dem Gehäuse (3), wobei ein bevorzugt als Zahnriementrieb ausgebildeter Riementrieb (13) zum Verstellen des Schlittens (10) dient,
**dadurch gekennzeichnet,**
**dass** in den Antriebsstrang (17) zwischen dem Elektromotor (18) und dem Riementrieb (13) zum Verstellen des Schlittens (10) eine, bevorzugt als Durchrastkupplung ausgebildete, Überlastkupplung (28) integriert ist, wobei die Überlastkupplung (28) zur Drehmomentübertragung zwischen einer Antriebs- und einer Abtriebseite mindestens ein bei Überlast einfederndes, rotierbares Kunststofffederelement (34, 35) umfasst.

2. Vorrichtung nach Anspruch 1,
**dadurch gekennzeichnet,**
**dass** das Kunststofffederelement (34, 35) monolithisch ist.

3. Vorrichtung nach Anspruch 1 oder 2,
**dadurch gekennzeichnet,**
**dass** das Kunststofffederelement (34, 35) eine zentrische Mehrkantabtriebsöffnung (37, 38) zum Übertragen eines Drehmomentes auf eine, bevorzugt ein Riemenantriebsrad (15) antreibende, Abtriebswelle (31) aufweist.

4. Vorrichtung nach einem der Ansprüche 1 bis 3,
**dadurch gekennzeichnet,**
**dass** das Kunststofffederelement (34, 35) zwei diametral gegenüberliegende, symmetrisch oder asymmetrisch zu einer eine Drehachse des Kunststofffederelementes (34, 35) aufnehmenden Ebene angeordnete, in radialer Richtung bezogen auf die Drehachse federnde Federabschnitte (40, 41) aus Kunststoff aufweist.

5. Vorrichtung nach einem der Ansprüche 1 bis 4,
**dadurch gekennzeichnet,**
**dass** das mindestens eine Kunststofffederelement (34, 35) mindestens einen Wälzkörper (44, 45), insbesondere eine Rolle, aus einem zu dem Kunststoff des Kunststofffederelementes (34, 35) unterschiedlichen, bevorzugt eine höhere Festigkeit aufweisenden, insbesondere metallischen Material zur Drehmomentübertragung auf eine Rastverzahnung (33) trägt, und dass der mindestens eine Wälzkörper (44, 45) bei Überlast durch Einfedern des mindestens einen Kunststofffederelementes (34, 35) auf der Rastverzahnung (33) abrollend angeordnet ist.

6. Vorrichtung nach Anspruch 5,
**dadurch gekennzeichnet,**
**dass** die Rastverzahnung (33) auf der Antriebsseite der Überlastkupplung (28) angeordnet ist, insbesondere drehfest angeordnet zu einem oder monolithisch ausgebildet mit einem, insbesondere als Schneckenrad ausgebildeten, Antriebsrad (29).

7. Vorrichtung nach einem der Ansprüche 5 oder 6,
**dadurch gekennzeichnet,**
**dass** der mindestens eine Wälzkörper (44, 45) zwischen zwei Kunststofffederelementen (34, 35) angeordnet und bevorzugt auf einer von den Kunststofffederelementen (34, 35) gehaltenen Achse angeordnet ist.

8. Vorrichtung nach einem der vorhergehenden Ansprüche,
**dadurch gekennzeichnet,**
**dass** am Schlitten (10) eine Riemenspanneinrichtung (20) angeordnet sind, mit der zwei Riemenabschnitte, insbesondere zwei Riemenenden, zum Spannen des Riemens aufeinander zu verstellbar sind.

9. Vorrichtung nach einem der vorhergehenden Ansprüche,
**gekennzeichnet**
**durch** eine translatorische Schlittenführung, insbesondere umfassend zwei parallele Gleitstangen.

10. Vorrichtung nach Anspruch 9,
**dadurch gekennzeichnet,**
**dass** die Schlittenführung einends den Elektromotor (18), die Überlastkupplung (28) sowie ein Riemenantriebsrad (15) und anderenends eine Riemenumlenkrolle (16) trägt.

## Claims

1. An apparatus (1) for preparing foodstuffs, in particular ready meals, accommodated in a vessel (2), the apparatus comprising a steam generating unit which is disposed in a housing (3) and is intended for generating steam, the apparatus also comprising a steam feeding unit (4) which is connected to the steam generating unit in a steam-conducting manner via a steam supply line and which has a steam probe (6) which has at least one steam discharge opening, the apparatus also comprising linear drive means which have a drive train (17) which has an electric motor (18) and by means of which a carriage (10) which carries the steam feeding unit (4) or a vessel support (7) is displaced in a translational manner relative to the housing (3), a belt drive (13), preferably realized as a toothed belt drive, being used for displacing the carriage,
**characterized in that**
an overload clutch (28), preferably realized as a ratcheting clutch, is integrated in the drive train (17) between the electric motor (18) and the belt drive (13) for the purpose of displacing the carriage (10), the overload clutch (28) comprising at least one rotatable, plastic spring element (34, 35) which deflects in the case of an overload for transmitting a torque between a drive side and an output side.

2. The apparatus according to claim 1,
**characterized in that**
the plastic spring element (34, 35) is monolithic.

3. The apparatus according to claim 1 or 2,
**characterized in that**
the plastic spring element (34, 35) has a centric polygonal output opening (37, 38) for transmitting a torque to an output shaft (31) which preferably drives a belt drive wheel (15).

4. The apparatus according to any one of claims 1 to 3,
**characterized in that**
the plastic spring element (34, 35) has two diametrically opposite spring sections (40, 41) which are made of plastic and which are disposed symmetrically or asymmetrically to a plane which accommodates an axis of rotation of the plastic spring element (34, 35) and which spring in the radial direction in relation to the axis of rotation.

5. The apparatus according to any one of claims 1 to 4,
**characterized in that**
the at least one plastic spring element (34, 35) carries at least one rolling element (44, 45), in particular a roller, which is made of a different material than the plastic of the plastic spring element (34, 35), in particular metallic material, which preferably has a higher thickness in order to transmit a torque to a lock gearing (33), and that, in the case of an overload, the at least one rolling element (44, 45) is disposed so as to unroll by springing of the at least one plastic spring element (34, 35) on the lock gearing (33).

6. The apparatus according to claim 5,
**characterized in that**
the lock gearing (33) is disposed on the drive side of the overload clutch (28), in particular disposed in a non-rotatable manner in relation to or in a monolithic manner with a drive wheel (29), in particular realized as a worm wheel.

7. The apparatus according to claim 5 or 6,
**characterized in that**
the at least one rolling element (44, 45) is disposed between two plastic spring elements (34, 35) and is preferably disposed on an axis which is supported by the plastic spring elements (34, 35).

8. The apparatus according to any one of the preceding claims, **characterized in that**
a belt tensioning device (20) is disposed at the carriage, two belt sections, in particular two belt ends, being displaceable towards one another by means of said belt tensioning device (20) in order to tension the belt.

9. The apparatus according to any one of the preceding claims, **characterized by**
a translational carriage guiding, in particular comprising two parallel sliding rods.

10. The apparatus according to claim 9,
**characterized in that**
the carriage guiding supports the electric motor (18), the overload clutch (28) and a belt drive wheel (15) at one end and a belt pulley (16) at the other end.

## Revendications

1. Dispositif de préparation de produits alimentaires, notamment de plats cuisinés, reçus dans un récipient (2), ledit dispositif comprenant une unité de génération de vapeur qui est disposée dans un boîtier (3) et qui est destinée à générer de la vapeur, une unité (4) d'alimentation en vapeur qui est reliée à l'unité de génération de vapeur de manière à conduire de la vapeur par une conduite d'alimentation en vapeur et qui comprend une sonde de vapeur (6) qui a au moins une ouverture de décharge de vapeur, et des moyens d'entraînement linéaire qui ont un groupe motopropulseur (17) pourvu d'un moteur électrique (18) et qui sont destinés au déplacement en translation d'un chariot (10) supportant l'unité (4) d'alimentation en vapeur ou un support de récipient (7) par rapport au boîtier (3), un entraînement par courroie (13) configurée, de préférence, comme entraînement par courroie dentée servant au déplacement du chariot (10),
**caractérisé en ce**
**qu'**un accouplement de surcharge (28) configuré, de préférence, comme accouplement à glissement est intégré dans le groupe motopropulseur (17) entre le moteur électrique (18) et l'entraînement à courroie (13), l'accouplement de surcharge (28) comprenant au moins un élément (34, 35) de ressort en matière plastique qui enfonce en cas de surcharge et qui peut être tourné et qui est destiné à transmettre un couple entre un côté d'entraînement et un côté de sortie.

2. Dispositif selon la revendication 1,
**caractérisé en ce que**
l'élément (34, 35) de ressort en matière plastique est monolithique.

3. Dispositif selon la revendication 1 ou la revendication 2,
**caractérisé en ce que**
l'élément de ressort (34, 35) en matière plastique a une ouverture (37, 38) de sortie polygonale centrale pour transmettre un couple à un arbre de sortie (31) qui entraîne, de préférence, une roue (15) d'entraînement à courroie.

4. Dispositif selon l'une quelconque des revendications 1 à 3,
**caractérisé en ce que**
l'élément de ressort (34, 35) en matière plastique a deux parties de ressort (40, 41) en matière plastique diamétralement opposées qui sont symétriques ou asymétriques à un plan qui reçoit un axe de rotation de l'élément de ressort (34, 35) en matière plastique et qui font ressort dans la direction radiale par rapport à l'axe de rotation.

5. Dispositif selon l'une quelconque des revendications 1 à 4,
**caractérisé en ce que**
l'au moins un élément (34, 35) de ressort en matière plastique supporte au moins un élément de roulement (44, 45), notamment un rouleau en une matière, notamment métallique, qui est différente de la matière plastique de l'élément (34, 35) de ressort en matière plastique et qui a, de préférence, une épaisseur supérieure afin de transmettre un couple à une denture d'encliquetage, et **en ce que** l'au moins un élément de roulement (44, 45) est disposé de manière à dérouler sur la denture d'encliquetage (33) en cas de surcharge par l'enfoncement de l'au moins un élément (34, 35) de ressort en matière plastique.

6. Dispositif selon la revendication 5,
**caractérisé en ce que**
la denture d'encliquetage (33) est disposée du côté d'entraînement de l'accouplement de surcharge (28), la denture d'encliquetage (33) étant notamment disposée de manière solidaire en rotation ou réalisée de manière monolithique avec une roue d'entraînement (29) réalisée notamment comme roue à vis sans fin.

7. Dispositif selon la revendication 5 ou la revendication 6,
**caractérisé en ce que**
l'au moins un élément de roulement (44, 45) est disposé entre deux éléments (34, 35) de ressort en matière plastique et est, de préférence, disposé sur un axe qui est supporté par les éléments (34, 35) de roulement en matière plastique.

8. Dispositif selon l'une quelconque des revendications précédentes, **caractérisé en ce**
**qu'**un dispositif (20) de tension de courroie est disposé sur le chariot (10), deux parties de courroie, notamment deux extrémités de courroie, pouvant être déplacées l'une vers l'autre au moyen du dispositif (20) de tension de courroie afin de mettre la courroie sous tension.

9. Dispositif selon l'une quelconque des revendications précédentes, **caractérisé**
**par** un guidage de chariot en translation comprenant notamment deux tiges de glissement parallèles.

10. Dispositif selon la revendication 9,
**caractérisé en ce que**
le guidage de chariot supporte le moteur électrique (18), l'accouplement de surcharge (28) et une roue (15) d'entraînement à courroie à une extrémité et un rouleau (16) de renvoi à courroie à l'autre extrémité.
